# EUROPEAN PATENT APPLICATION

(11) **EP 4 368 314 A1**
(43) Date of publication of application: **15.05.2024**
(21) Application number: 22206866.0
(22) Date of filing: 11.11.2022
(51) Int. Cl.: B22F 3/00, B22F 7/00, B22F 7/02, B22F 9/10, H01M 4/04, H01M 4/66, H01M 4/80, B22F 7/04

(54) **THREE-DIMENSIONAL NETWORK OF METAL FIBERS AND PRODUCTION METHOD**

(71) Applicant: batene GmbH, 73240 Wendlingen am Neckar (DE)
(72) Inventor: Spatz, Joachim, 70569 Stuttgart (DE); Möller, Martin, 73240 Wendlingen am Neckar (DE); Hackner, Maximilian, 73240 Wendlingen am Neckar (DE)
(74) Representative: Manitz Finsterwald Patent- und Rechtsanwaltspartnerschaft mbB

(57) **Abstract**

Three-dimensional (3D) network of metal fibers, comprising a plurality of metal fibers fixed to one another, wherein said plurality of metal fibers comprises a first kind of metal fibers and a second kind of metal fibers, wherein the first kind and second kind of metal fibers are different from one another, in particular in regard to their mechanical properties.

## Description

The present invention concerns a three-dimensional (3D) network of metal fibers and a production method for such a network of metal fibers.

3D structures, such as networks of metal fibers have advantageous properties in several technological fields, such as filters and electrodes, in particular electrodes for batteries. Especially very fine fibers, such as microfibers with thicknesses and/or widths in the range of 50 µm or less provide very large surface to volume ratios and corresponding surface areas which was found advantageous for example for electrode applications. Further, the surface area is even higher when such thin fibers have a non-round cross-section, e.g. ribbon like cross sections. Also, for filter applications, such networks with fibers having a non-round cross-section, e.g. ribbon like cross-sections, were found to have better filtering properties, presumably due to turbulences caused by the shape of fibers having such non-round cross-sections.

For producing such 3D networks, metal fibers can be laid into an electrically conducting and mechanically strong nonwoven using various processes (dry and wet) known to the skilled person. For the bonding of such nonwovens, processes such as sintering at temperatures close to or above the melting point are used. The production of such networks of metal fibers is known to the skilled person e.g. from WO2020/016240 A1, the entire content thereof is herewith incorporated by reference. Metal fibers can be produced by melt spinning, as described for example in WO2016/020493 A1 and in WO2020/229400 A1, the entire content of these references is incorporated herein by reference.

However, in particular when these networks are based on fine fibers, a shrinkage of the thickness of the network (z-axis) can be observed. Moreover, such nonwoven networks can only be handled with very elaborate precautions when being made from relatively short and fine fibers, to prevent them from falling apart and from shrinkage in the thickness of the web (z-axis), e.g. during sintering or during coating with active electrode material. This stands in the way of a roll-to-roll process for producing the 3D networks of fine metal fibers.

Furthermore, even after completing the 3D networks by sintering the metal fibers of a non-woven to one another, the resulting networks may have problems with regard to their mechanical stability against compression. Especially for networks of microfibers with thicknesses and/or widths in the range of 50 µm or less even after sintering the metal fibers to one another the stability is not sufficient for large scale production processes, such as roll-to-roll processes for loading the networks of metal fibers with electrode active material.

3D networks of metal fibers with electrically conductive links, which are used as electron current collectors in lithium-ion batteries enable very thick electrodes when they get filled with the respective active material. Such thick electrodes can provide an area loading of 100 mAh /cm² or more. Such electrodes constructed with a 3D metal fiber network enable large currents towards the power socket in 3 dimensions, but also regarding the ion mobility within the electrode itself (also described in unpublished patent application PCT/EP2021/062443, filed on May 11, 2021). This is in particular of interest, when the electrode is a battery electrode and the battery is subjected to fast charging or discharging cycles.

Especially when using very fine fibers, each fiber can only handle a certain current due the small conductor cross-section. When the current is too high, it is possible that individual fibers are destroyed. Repeated use may result in more and more damages to the network of metal fibers and thereby gradually deteriorate the function thereof. Furthermore, when being used in a battery, a high temperature may occur at individual fibers having a high current load. This may result in a degradation of the active material and/or the electrolyte.

Accordingly, there is a problem that existing network structures have a limited life-time when subjected repeatedly to electric currents, such as in battery electrodes, and that such networks of metal fibers are fragile and difficult to process e.g. in a roll-to-roll process when producing such networks of metal fibers or when loading such networks of metal fibers with active electrode material.

This problem is solved by the present application by providing a three-dimensional network structure according to claim 1. In particular, the three-dimensional (3D) network of metal fibers , comprises a plurality of metal fibers fixed to one another, wherein said plurality of metal fibers (14) comprises a first kind of metal fibers and a second kind of metal fibers, wherein the first kind and second kind of metal fibers (14) are different from one another, in particular in regard to their mechanical properties.

In accordance with the present invention, the 3D network comprises a plurality of metal fibers of a first kind and a plurality of metal fibers of a second kind, wherein the first kind and second kind of metal fibers are distinct from one another. The first kind can be considered a stabilizing kind of fibers, whereas the second kind may be considered a functional kind of fibers. The second kind may have a larger surface area per weight of metal fibers compared to the first kind. This means that also the first kind of metal fibers may provide the desired functionality, such as filtering effect or available surface area for electrochemical processes, even though to a lesser extent.

By using different kinds of metal fibers, one kind of metal fibers, i.e. the first kind as described above, can act as a mechanical stabilizing component and as a more resilient electrical conductor through the thickness of the 3D network of the second kind of metal fibers, most importantly in the direction of the z-axis. In particular, the first and second kind of metal fibers form an integrated network of metal fibers, meaning that the first and second kind of metal fibers are preferably directly sintered to one another, forming a single 3D network with both kinds of metal fibers being included. In other words, the first and second kind of metal fibers do not form separate networks. Further, by using to distinct kinds of metal fibers, they constitute a hierarchically constructed network in which thin fibers form a fine mesh, supported by the stronger fibers, e.g. to collect the current within small volume elements while the thicker fibers ensure the further transport of the locally collected electrons by sustaining a higher electric current due to a higher conductive cross-section, thereby acting as a conducting path not only in the x-y-plane of the Network but also in the z-axis of the porous network of metal fibers. In consequence, the use of two distinct kinds of metal fibers allows to reduce the electric load on individual fibers even further, i.e. one of the metal fiber kinds provides current paths in the direction of the z-axis, and the second layer collects the current on the x-y plane.

In addition to providing electrical stabilization, the mixture of two different kinds of fibers protects the network of metal fibers from undesired densification in z-direction, in particular during sintering the metal fibers to one another but also when loading the 3D network with active material for preparing a functional electrode for Li-batteries. It was observed that by combining two different kinds of fibers, especially during sintering of the metal fibers to form a network, a thickness shrinkage, i.e. a shrinkage in the z-axis, occurs when only one kind of metal fibers is used. Especially when these metal fibers have a thickness and/or width of equal to or less than 80 µm. Such a shrinkage can be reduced or even entirely avoided by using two different kinds of metal fibers. Thereby one of the two kinds, i.e. the first kind described above, acts as a mechanical stabilizer and prevents the shrinkage. When preparing the metal fibers for sintering, they are typically first deposited on a support, forming for example a web-like non-woven. The weight of the fibers may result in a compression causing a gradient in porosity, which is not desirable. Such a compression can occur in particular when the fibers are softened due to elevated temperatures during sintering. Moreover, also when the fibers are deposited from a liquid dispersion and the liquid is drawn off through a porous support structure, the hydrodynamic pressure leads to compression of the web in the direction of the z-axis. This can be remedied by mixing in bulky fibers with greater mechanical stability, i.e. thicker fibers, fibers with a different melting point or corrugated fibers.

The metal fibers of each of the first kind and of the second kind may have a distribution regarding their properties, such as width, thickness, length and so on. A difference in the meaning of this description implies that such distributions of the first and second kind are different from one another. The second kind shall not be understood as a part of the distribution of the first kind. Mixing the second kind and the first kind should give an at least bimodal distribution of these properties.

Further, the present invention relates to a method of producing a 3D network of metal fibers, comprising the following steps:
- Step A:: Mixing a first kind of metal fibers and a second kind of metal fibers with one another, thereby providing a plurality of metal fibers comprising the mixture of the first kind of metal fibers and second kind of metal fibers.
- Step B:: sintering the first kind of metal fibers and the second kind of metal fibers to one another to form a network of metal fibers in accordance with the present invention.

As described above, by mixing two kinds of metal fiber, one kind, e.g. the first kind, can act as a mechanical and electrical stabilizing component. Further, during the sintering step B, the metal fibers soften since they are heated. Without the mixture of two kinds of metal fibers, the gravitational force compresses the metal fibers, thereby the thickness of the metal fiber network and the porosity is reduced.

Further, the present invention relates to a battery comprising at least one electrode having a network structure according to the present invention.

Based on the combination of mechanical and electrical stabilization, the mechanical load and the electric current load on individual fibers are reduced. Thereby, the life-time of the battery, in particular when subjected to fast charging and discharging cycles, can be increased.

In the following preferred embodiments of the present invention are described:
In the 3D network of metal fibers of the present invention open pores are in-between the metal fibers. The fibers are the connections of the network. In particular, the 3D network is composed of a plurality of metal fibers that are fixed to one another, in particular sintered or soldered to one another.

In accordance with the present invention, it is preferable that the second kind of the plurality of metal fibers are fibers having a thickness of 50 µm or less, more preferably of 30 µm or less, even more preferably of 10 µm or less and most preferably of 5.0 µm or less. With such thin fibers, a large surface area may be provided, resulting in advantageous electrochemical properties and suppressing growth of lithium dendrites when the 3D network is used as an electrode in a lithium ion battery. In the 3D network of the present invention the lower limit of the thickness of the second kind of metal fibers of the second kind is not particularly limited. In a preferred embodiment of the invention it may be 1.0 µm or more. Fibers having a lower thickness may be difficult to produce, e.g. by melt spinning, and difficult to handle.

In the 3D network of the present invention, it is further preferable when the metal fibers of the second kind have a width of 80 µm or less, more preferable of 70 µm or less, even more preferable of 40 µm or less and most preferably of 5.0 µm or less. With such thin fibers, a large surface area may be provided, resulting in advantageous electrochemical properties and suppressing growth of lithium dendrites when the 3D network is used as an electrode in a lithium ion battery. In the 3D network of the present invention the lower limit of the thickness of the metal fibers of the second kind is not particularly limited. In a preferred embodiment of the invention it may be 1.0 µm or more. Fibers having a lower thickness may be difficult to produce, e.g. by melt spinning, and difficult to handle.

The first kind of metal fibers preferably has a thickness which is at least 1.50 times, more preferably at least 2.0 times, even more preferably at least 2.5 times the width of the second kind of metal fibers. Also preferably, the width of the first kind of metal fibers is at least 1.50 times, more preferably at least 2.0 times, even more preferably at least 2.5 times the width of the second kind of metal fibers. With the thickness and/or width of the first kind being at least 1.5 times that of the second kind, a stabilizing effect can be is obtained. Accordingly, the thickness and/or width of the first kind of metal fiber is at least 50% (at least 1.50 times) larger, in particular at least 100 % (at least 2.0 times) larger, than the thickness and/or width of the second kind of metal fibers. Thereby a mechanical and electrical stabilization can be easily achieved.

Further, it is preferred that the ratio of the difference between the arithmetic mean values of the thickness and/or width of the first kind and second kind of metal fibers to the product of the variances of the first kind and second kind of metal fibers is at least 5, in particular at least 7, further in particular at least 10.

It is preferable if the metal fibers of the first and of the second kind have a length of 2.0 mm or more, more preferable of 10 mm or more and even more preferable of 20 mm or more and even more preferably of 70 mm or more. With the length of the metal fibers fulfilling the above length specification, mechanical stability of the 3D network of metal fibers is improved, since due to the increased length of the metal fibers, each metal fiber can have several points of contact to other metal fibers of the network where it is fixed to the respective other metal fibers to form a mechanically strong and electrically conductive connection there between. Therefore, when one connection between metal fibers breaks, this does not compromise the overall structural integrity of the network or separate a metal fiber from the network, since several other connections between the fibers are available, to hold the network together and provide the desired electrical conductivity. Preferably, fiber length should be in the range of 1.0 to 20 cm, more preferably in a range of 3.0 to 15 cm and even more preferably in a range of 4.0 to 10.0 cm, since then arranging the fibers by carding is easily possible.

Thickness, width and length for each kind of metal fibers may follow a distribution. In such a case, the values indicated herein refer to an arithmetic mean value.

It is further preferred when the first kind of metal fibers differs from the second kind of metal fibers in the cross-sectional form and/or when the first kind of metal fibers differs from the second kind of metal fibers in their melting point before being sintered to one another and/or when the first kind of metal fibers differs from the second kind of metal fibers in their longitudinal shape and/or when the first kind of metal fibers differs from the second kind of metal fibers in their width and/or thickness and/or wherein the first kind of metal fibers differs from the second kind of metal fibers in their metal alloy, in particular in regard to alloying additions to the same base metal. The longitudinal shape describes how the fibers extend along their length, e.g. in a corrugated manner or in a straight manner. A corrugated manner includes sudden changes of the direction of the fibers, whereas a straight manner, includes no changes or only smooth changes. A sudden change is to be considered, when the direction change is observed in a length section which is less than the fiber's width. A direction change which extends over a distance longer than the fiber's width is a smooth change.

In a preferred embodiment, at least the metal fibers of the second kind have a non-round cross-section, in particular a ribbon like shape. Such a non-round cross-section provides for a large surface area, which may be advantageous for filtering applications, due to turbulences caused by the non-round cross-section in a fluid flowing through the filter. When being used in a battery electrode, the fibers having a non-round cross-section increase the surface area of the electrode material, thereby improving the electrochemical properties of the electrode and the suppression of lithium dendrite growth for example in lithium metal batteries.

Preferably, the second kind of metal fibers have a cross-sectional shape which is non-round, i.e. the second kind of metal fibers is ribbon-like, whereas the first kind of fibers has a substantially round cross-section. The ribbon-like fibers provide a large surface area per mass, providing the desired functionality. In contrast, the round fibers have a lower surface area per mass, but having a higher mechanical stability. Nevertheless, even though the round fibers have a lower surface area per mass, they provide such a surface and thereby contribute to the desired functionality.

In a further preferred embodiment, the first and second kind of metal fibers differ in their melting point. This is possible even when these kinds of metal fibers are of the same material. When producing the metal fibers by melt spinning, a melt of the fiber's material is rapidly cooled down. Thereby the melt solidifies extremely fast, not allowing the material to arrange itself in a thermodynamic preferred state, as explained in detail in WO2020/016240 A1. After production by melt spinning, the metal fibers can be subjected to an annealing or ageing treatment, thereby allowing the material to relax and arrange in a thermodynamic preferred state. It was observed that the melting point of the metal fibers is higher after such annealing treatment, even though the material composition remains unchanged. The difference in melting point between the first kind of metal fibers and the second kind of metal fibers can be at least 1 K, and is preferably at least 5 K, more preferably at least 6 K, even more preferably at least 7 K, even more preferably at least 8 K. Another criterium for the difference of the first and the second kind of fiber, that results from the rapid cooling during the melt spinning is the degree of recrystallization which can be observed when the fibers get heated towards melting as a measure of their metastable state. E.g., the onset of recrystallization can take place several 100 degrees below the melting point.

There is no specific upper limit for the melting point difference. For practical reasons only, the melting point difference is typically equal to or less than 20 K, preferably equal to or less than 15 K.

It is particularly preferable that the metal fibers are directly sintered to one another, without the need of an additional binder, e.g. a polymeric binder. Most preferably, the fixation of one metal fiber to another metal fiber is realized by the material of the metal fibers. It is therefore further preferred that the metal fibers are fixed to one another without a polymeric binder, since such polymeric binders often have a poor electrical conductivity and high temperature performance. With the metal fibers being directly sintered to one another, it is also possible to omit solder materials or the like in the network according to the invention.

According to a preferred embodiment of the present invention, the first kind of metal fibers differs from the second kind of metal fibers in their metal alloy, in particular in regard to alloying additions to the same base metal. A small difference in alloying additions may have a significant impact on the melting temperature. The fibers of the higher melting alloy therefore can stabilize the network structure during sintering. During sintering, the lower melting fibers are heated close to their melting point or even above, thereby these fibers soften significantly. However, due to the higher melting fibers, e.g. of a different alloy of the same base metal, a shrinkage of the complete network structure in the direction of the z-axis can be reduced or even avoided.

While the metal fibers of the first kind and of the second kind can differ from one another at least in view of the above-mentioned ways, it is nevertheless preferred that the metal fibers of the first and second kind are of substantially the same material, i.e. composition of elements. Thereby, an integrated network of metal fibers can be easily produced, since the first and second kind of metal fibers can easily bond to one another.

Further, it is preferred when the first kind of metal fibers is obtainable from the second kind of metal fibers for example by thermal treatment. In this context, the second kind of metal fibers is preferably obtainable by melt spinning, and the first kind of metal fibers is preferably obtainable by thermal treatment of the second kind of metal fibers. The thermal treatment can allow the metal fiber material to approximate its thermodynamic equilibrium, thereby increasing the melting point. Further, by thermal treatment it is possible to change the cross-sectional shape of the second kind of metal fiber from a non-round cross-section, i.e. a ribbon like cross-section, to a substantially round cross-section.

The ratio of the first and second kind of metal fibers may vary, depending on degree of electrical and mechanical stabilization required. The weight ratio of the first kind to the second kind is preferably in the range of 0.10 : 99.90 to 99.90 : 0.10, more preferably in the range of 15 : 85 to 85 : 15, even more preferably in the range of 30 : 70 to 70 : 30, even further more preferably in the range from 40 : 60 to 60 : 40. The weight portion of the stabilizing fibers, i.e. the first kind, may exceed the weight portion of the second fibers. However, due to the larger surface area of the second kind of fibers, the desired functionality is nevertheless provided. The provision of the desired functionality comes also from the first kind, even though probably to a lesser degree. Preferably, the ratio of the first kind of metal fiber to the second kind of metal fiber is set such that the amount of the first kind is above a percolation threshold. Thereby, the first kind of metal fiber in the sintered 3D network extend throughout the complete network structure, providing improved mechanical and electrical stabilization in the direction of the z-axis but also in the x-y-plane.

Preferably, the 3D network of metal fibers has a thickness of at least 200 µm, more preferably of at least 500 µm, further more preferably of greater than 550 µm, even more preferably of at least 750 µm, even further more preferably of at least 1.000 µm. The thickness of the first layer can be even 2.000 µm or higher. The upper limit for the thickness of the first layer is not particularly limited and may 10.000 µm or less, 8.000 µm or less, 6.000 µm or less or 4.000 µm or less.

The present invention also concerns a composite structure, comprising the 3D network of metal fibers of the present invention. In the following, the 3D network will also be referred to as the first layer. In the composite structure of the present invention, the 3D network of metal fibers, i.e. the first layer, is arranged on a second layer which is distinct from the 3D network, so that the first and second layer are in an areal contact with each other.

The second layer has a purpose of mechanically supporting the 3D network of the first layer. Mechanical support is achieved by arranging the first layer on the second layer. Thereby, when a mechanical load is applied, it does not directly act on individual fibers. Instead, the second layer acts as a carrier for the porous structure which takes up the mechanical load, thereby preventing individual metal fibers from being damaged during the handling of the 3D network e.g. during manufacturing of an electrode comprising such a network. Accordingly, the present embodiment provides a 3D network having increased mechanical strength, since the second layer is in areal contact with the first layer and provides mechanical and electrical stabilization.

Further, the increase of the mechanical stability makes it easier to further process the network structure, e.g. to incorporate an electrically active material into the porous structure. The mechanical strength is sufficiently high that a roll-to-roll processing is possible.

The second layer may be of the substantially same material as the first and/or second kind of metal fibers. Thereby making it easy to form a stable fixation between the 3D network and the second layer. According to a preferred embodiment of the present invention, the second layer is an electrically conductive layer.

Due to the electric coupling of the first and second layer (with the second layer being electrically conductive), a current conducted through the thickness of the network, i.e. the porous structure is only required to traverse the z-plane through the metal network, whereas the second layer acts as an areal current collector in the x-y-plane, i.e. the first and second layer are in areal contact with each other. Thereby, the electric load on individual sections of the porous structure, e.g. foam struts or fibers, is reduced. Accordingly, the present invention provides a 3D network having increased mechanical and electrical stability, since the second layer is in areal contact with the first layer and provides mechanical and electrical stabilization.

According to another embodiment, the second layer is made of a different material than the first and second kind of metal fibers, for example a polymeric material. In such a case. In other words, the material of the second layer is different from the material of the first and second kind of metal fibers in the 3D network. In such a case, the fixation of the second layer to the 3D network is not permanent, i.e. the second layer is removable form the 3D network of metal fiber, e.g. by peeling off, without destroying the structure of the 3D network. The second layer may be used for mechanically stabilizing and protecting the 3D network when filling the network with an electrode active material. Thereafter, it may no longer be necessary and the removal of the second layer reduces the areal weight of the network structure.

The second layer can be a porous or a non-porous layer. Preferably, the second layer is a porous layer, in particular a porous metal layer or a porous non-metal layer. The porous metal layer can be a perforated metal foil or a woven metal mesh, the porous non-metal layer can be a polymeric layer, e.g. a perforated polymeric sheet or a woven structure of polymer filaments.

In the composite structure of the present invention, the second layer, e.g. a metal or non-metal foil, has preferably a thickness of at least 1 µm, more preferably of at least 5 µm, even more preferably of at least 10 µm, even further more preferably of at least 20 µm. In particular polymeric foils can be very thin and easily removed from the 3D network of metal foils, e.g. by peeling off. An example for a suitable polymeric material of such a foil is a fluorinated polymeric material, such as PTFE.

It is further preferable that the 3D network of metal fibers, is directly fixed to the second layer without the need of an additional binder, e.g. a polymeric binder. Most preferably, the fixation of the metal fibers thereof to the second layer is realized by the material of the porous structure and of the second layer. It is therefore further preferred that the metal fibers are fixed to the second layer without a polymeric binder, since such polymeric binders often have a poor electrical conductivity and high temperature performance. With the metal fibers being directly sintered to the second layer, it is also possible to omit solder materials or the like in the resulting layered structured.

According to a particularly preferred embodiment of the present invention, the metal material of the first layer and the material of the second layer are substantially the same material. With both, the metal of the first layer and the second layer being substantially of the same material, a stable fixation by sintering the layers onto each other is achieved. Substantially the same material as used herein means that these materials are based on the same element, e.g. copper or aluminum. Herein based on the same element indicates that the material comprises said element to an extent of at least 80 wt.-%, in particular of at least 90 wt.-%, the remainder may be other elements and may be different for the first and second kind of metal fibers. In one embodiment, the material of both kinds of metal fibers is identical.

According to another preferred embodiment, the first layer has a different structure compared to the second layer. Particularly, the second layer can have a 2-dimensional (2D) structure, and can be non-porous, in particular a foil. A 2D structure is a structure having substantially no functional pores in the thickness direction, i.e. the direction of the z-axis. Functional pores are such pores which contribute to the essential technical function of the network structure, i.e. a filtering effect in case of filter applications or participating in the electrochemical processes of a battery electrode. In a further preferred aspect of this embodiment, the second layer has a porous structure, e.g. in the form of a woven mesh or an irregularly laid layer of sintered metal fibers having a higher mechanical stability compared to the first layer or in the form of a perforated polymeric sheet. Due to the pores or perforations of the second layer, the first layer can be loaded with an active material which penetrates the first layer through the second layer. By introducing the active material, through the second layer, the first layer is protected from mechanical loads during introduction of the active material. The active material is in particular an electrode active material.

For light weight applications, it may be desirable to remove the second layer after loading the first layer with the active material. In such a case, it is preferred to have the second layer of a different material than the first layer, for example from a polymeric material or a non-adhering metal such as molybdenum which can be peeled of the first layer.

The porous structure of the second layer is preferably a metal mesh or expanded metal. The pore size of second layer is not particularly limited, in particular when the porous metallic structure of the first layer is already finalized even before bringing it into contact with the second layer. From a production point of view, it is possible to deposit a plurality of loose metal fibers on a porous second layer, even when the pores of the second layer are larger than the length of the metal fibers. However, it is preferred when the size of the pores of the second layer are equal to or less than the length of the metal fibers. The size of the pores herein corresponds to the open diameter of the pores at the surface of the second layer which is in contact with the first layer. In case of a metal mesh, the pore size corresponds to the mesh width.

Further preferably, in accordance with the present invention, the thickness of the first layer is larger than the thickness of the second layer. The predominant part of the functionality of the network structure is provided by the first layer. By having the thickness of the first layer larger than the thickness of the second layer, the weight contribution of the second layer can be reduced to a minimum, thereby providing, in case of the network being a battery electrode, a large capacity per weight of the network structure.

By arranging the 3D network on the second layer, a composite structure of a 3D structures and a 2D substrate, such as a film, a screen fabric or 2D mesh structures is realized.

Preferably, the 3D network of the present invention is part of a battery electrode.

Herein, all of the preferred embodiments and features described above or in the claims for the 3D network itself apply *mutatis mutandis* to the method of producing such a 3D network as well as to the method of producing an electrode.

For example, it is also preferred for the method of producing a 3D network according to the present invention that the first kind and the second kind of metal fibers are of at least substantially the same material. Thereby a stable bonding between these two kinds of fibers can be obtained and the desired mechanical and electrical stabilization can be achieved. Further details for the first kind of metal fibers and the second kind of metal fibers are described in detail above. Accordingly, it is preferred that the first and second layer are fixed to one another, so that an electrical contact is formed between these layers. The fixation of the first and second layer can be achieved by different means, such as sintering, soldering, ultrasonic welding or by adhering.

Independently from whether or not the network of metal fibers is already sintered or not before placing on the second layer, the second layer is preferably a porous structure. The porous structure of the second layer can be advantageous for subsequent processing steps which should avoid a compression of the first layer.

In accordance with the present invention, it is preferred to carry out the method of producing the 3D network of metal fibers as a roll-to-roll process. Thereby, a largescale production can be achieved.

As mentioned already above, the present invention further concerns a method of producing an electrode, in particular a battery electrode. The method of producing an electrode is a use of a 3D network in accordance with the present invention. In this method, the electrode material is preferably provided as a slurry having a thixotropic behavior.

In a preferred aspect of the method of producing an electrode of the present invention, the second layer is porous. Thereby, it is possible to load the first layer with an active material, in particular an active electrode material, by passing said active material through the pores of the second layer. The skilled person can select the pore size of the second layer depending on the particle size and/or fluidic behavior of the active material.

Preferably, the active material is introduced into the first layer in the form of a slurry, in particular of a thixotropic slurry. A thixotropic slurry reduces its viscosity when being subjected to sheering forces. After the sheering forces do no longer act on the slurry, the viscosity thereof increases again. To adjust such rheological behavior if necessary, the skilled person can add corresponding rheological additives which are commercially available. In this context, it is preferred when the thixotropic slurry is filled into the void portions of the 3D network structure, i.e. the first layer, through the porous second layer. This may be achieved by using a doctor blade. The thixotropic slurry is subjected to sheer forces when contacting the doctor blade. Thereby the viscosity of the slurry is reduced and it can flow through the pores of the second layer into the first layer. Thereby no mechanical load is applied on the first layer, preserving it from any compression. The thixotropic slurry, after penetrating into the first layer, is no longer subjected to sheer forces and therefore the viscosity thereof increases, so it does not flow out of the first layer but remains in there.

In a preferred embodiment of the present invention, at least the loading of the first layer with active electrode material through the pores of the second layer is carried out as a roll-to-roll process. Even more preferably, the method of producing an electrode includes the method of producing a 3D network of the present invention, i.e. as described herein.

The present invention also concerns a battery, comprising at least one electrode having a 3D network of metal fibers according to the present invention. The 3D network of the present invention may be utilized in many different kinds of batteries. However, especially with thicknesses of the 3D network of 200 µm or more, as described herein above as preferable, the battery can be in particular a mono-cell battery. A mono-cell battery as mentioned herein is not a stack of many battery cells, but is a single battery cell, having one anode, one cathode and a separator therebetween. Of course, the battery can also be a multi-cell battery.

The invention will now be described in further detail and by way of example only with reference to the accompanying drawings and figures as well as by various examples of the network and method of the invention. In the drawings there are shown:
Fig. 1 a schematic drawing illustrating the layers of the composite network structure of the present invention and the denominations z-axis and x-y-plane,
Fig. 2 a schematic drawing illustrating the method of producing a composite network structure in accordance with the present invention.
Fig. 3 a schematic drawing illustrating the method of producing an electrode in accordance with the present invention.
Fig. 4 a scanning electron microscope image of a 3D network of metal fibers in accordance with Example 1.
Fig. 5 a scanning electron microscope image of a 3D network of metal fibers in accordance with Example 2.
Fig. 6 a composite network structure of Example 3 in accordance with the present invention.
Fig. 7 a composite network structure of Example 4 in accordance with the present invention.

For reasons of clarity, in some figures not all or no reference signs are shown.

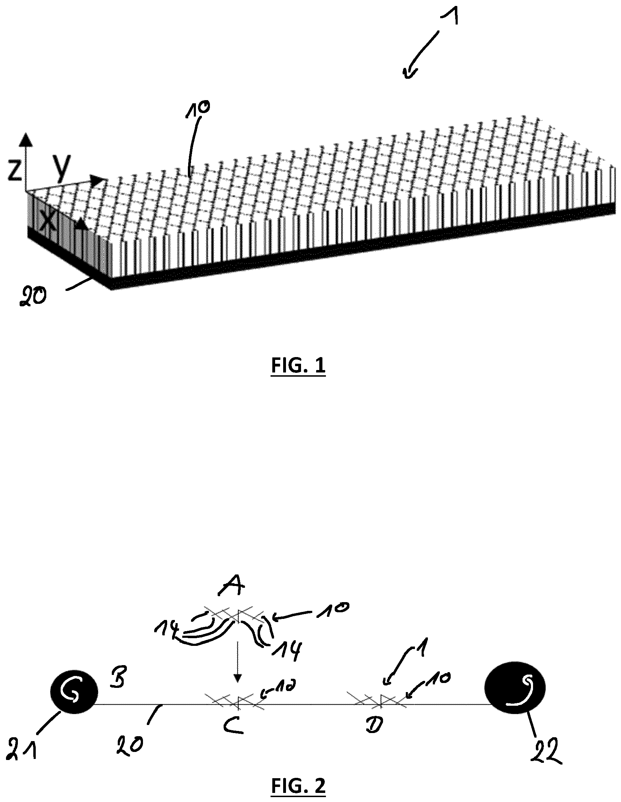

In Fig. 1 a composite network structure 1 of the present invention is schematically illustrated. The illustrated 3D composite structure 1 has a porous first layer 10 of a 3D network of metal fibers and an electrically conductive second layer 20. Each of the first and second layer expands in an x-y plane, as illustrated by the coordinate system in Fig. 1. The first layer 10 and the second layer 20 are in a direct areal contact with each other. In the drawing of Fig. 1, the areal contact between these layers extends parallel to the x-y-plane. The first layer 10, as shown in Fig. 1, is a 3D network of two kinds of metal fibers, which are sintered to one another. In the drawing of Fig. 1, this network is only schematically shown, thus individual fibers 12 (see Fig. 2) are not indicated by reference signs. The second layer 20 is a support layer, to which the fibers of the network of the first layer 10 are directly fixed by sintering. Thereby, the fibers in the network are in direct electrical contact with the electrically conductive second layer 20. When an electrochemical process provides electrons in the first layer, these electrons only have to travel through the network in the direction of the z-axis, which is supported by the first kind of metal fibers in the 3D network, before reaching the second layer 20, which can act as a current collector. Thereby the electric load on individual fibers is reduced, by the interaction of the first kind of metal fibers and the electrical conductive second layer, since the electrons do not have to pass the network of metal fibers in the x-y-plane to reach an electric connector (not shown in the drawings) and the electron transport in direction of the z-axis is supported by the first kind of metal fibers. In Fig. 2 a process for preparing a 3D network is illustrated. In a step A a mixture of two kinds of metal fibers are provided. In the schematic illustration of Fig. 2, this mixture encompasses metal fibers 14, which are loosely entangled with each other, i.e. not yet sintered to one another. In Fig. 2 only seven metal fibers are illustrated, further, for reasons of clarity, the schematic illustration does not show different kinds of metal fibers, even though, the present invention requires such two distinct kinds of metal fibers. Further, it is to be understood that in reality the number of metal fibers is much higher than in the schematic drawing of Fig. 2. A second layer which is electrically conductive is provided from roll 21. Roll 21 turns in the direction indicated by the white arrow. In step C, the mixture of metal fibers 14, i.e. the loose arrangement of metal fibers, is placed on the second layer 20. In step D, the first layer 10 is fixed onto the second layer 20 by sintering. Thereafter, the network structure 1 is rolled onto roll 22, which turns in the direction indicated by the white arrow. This illustrates, how the present invention of manufacturing a 3D network structure can be realized as a roll-to-roll process. Wile a rolling process is illustrated in Fig. 2, it is clear that a process with steps A to D as described above, can be also realized without rolls 21 and 22.

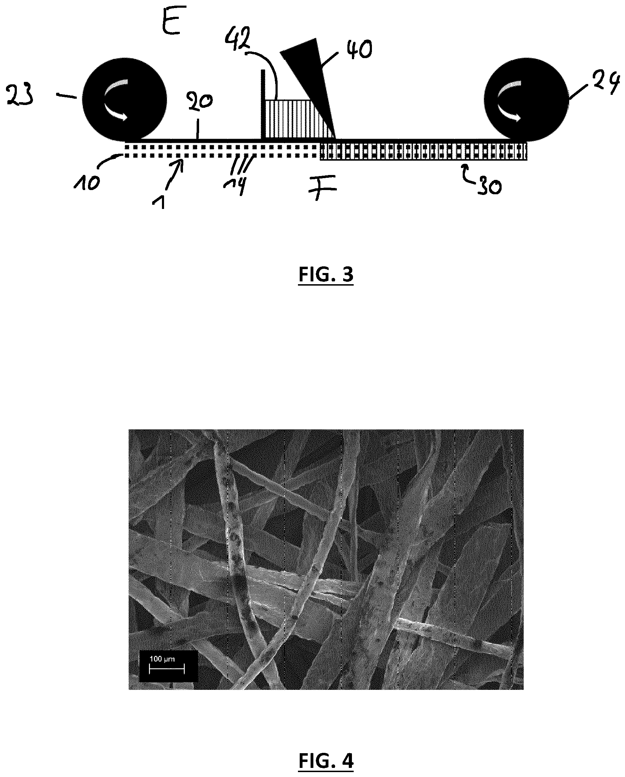

A schematic illustration for the production of an electrode 30 in accordance with the present invention is shown in Fig. 3. In Step E a 3D network 1 in accordance with the present invention, having a composite structure with a first and a second layer 10, 20 is provided from roll 23, rotating in the direction indicated by the white arrow. The network structure 1 has a first layer 10 and a second layer 20, as described above. The first layer 10 includes a network of metal fibers 14 sintered to one another. The second layer 20 is a porous layer. The network structure 1 is transported from roll 23 to a doctor blade 40, where a thixotropic slurry 42 of active electrode material is subjected to a sheer force and pressed through the second layer 20 into the first layer 10, thereby forming the electrode 30, after a drying step, which is not shown in Fig. 3. Since the doctor-blade acts on the second layer 20 only, the first layer is not subjected to any pressure, thereby an undesired compacting of the first layer 10 is avoided. The drying step may be performed directly after the filling of the pores with slurry 42 or at another stage or completely omitted, if the circumstances allow. As shown in Fig. 3, the electrode is then rolled onto roll 24, which rotates in the direction indicated by the white arrow. Thereby, the production of the electrode in accordance with the present invention is realized as a roll-to-roll process.

In principle, it is possible to perform the roll-to-roll processes of Fig. 2 and 3 as a single integrated process by instead of rolling the network structure 1 onto roll 22, directing it to the doctor blade 40 as shown in Fig. 3.

The following Examples further illustrate the present invention:
Examples 1 and 2 and Comparative Examples 1 and 2 describe the production of 3D networks of metal fibers in accordance with the present invention. Such 3D networks can be utilized as the first layer of a composite network structure, also in accordance with the present invention.

Example 1: For this Example, ribbon-like flat fibers (approx. 100 µm wide and 5 µm thick, equivalent radius approx. 12.6 µm) obtained by melt spinning were mixed 50:50 with nearly round fibers (radius approx. 45 µm) of the same material composition.

The fibers were sintered at 620 °C (200 K/min average heating rate, argon atmosphere, 60 sec holding time, natural cooling, i.e. removing from the furnace and allowing to cool to room temperature by themselves). It can be recognized from the scanning electron microscope image of Fig. 4 that the fibers were bonded together and also the shape of the fibers did not change. The network had a thickness of 950 µm after sintering.

Comparative Example 1 was conducted the same way as Example 1. However, only the ribbon-like flat fibers were used without round fibers. The thickness of the network after sintering was only about 300 µm.

A comparison of Example 1 and Comparative Example 1 shows that the use of two different kind of fibers, one having a ribbon-like shape with a non-round cross-section and the other one having a round cross-section, results in an improved mechanical stabilization during the sintering process, thereby avoiding a compacting of the metal fibers.

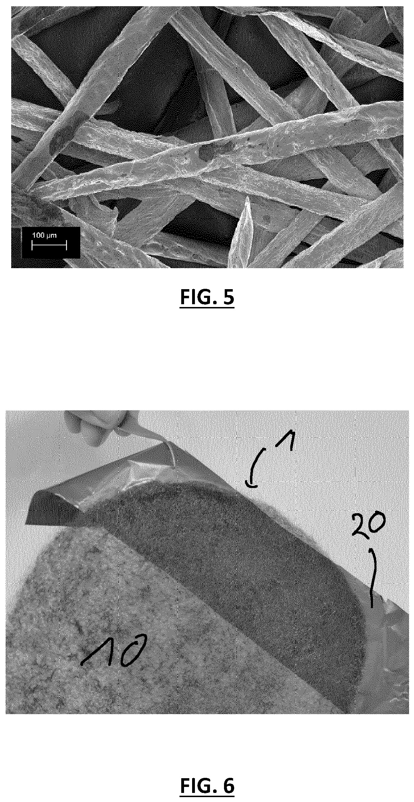

Example 2: For this example, ribbon-like flat fibers (about 80 x 5 µm) obtained by melt spinning were used. Half of the fibers (by weight) were aged at 400 °C for 60 min under inert gas and sintered with untreated fibers at 620 °C as described above for Example 1. The fibers were firmly bonded together after sintering and the thickness of the sintered network was 750 µm as shown in Fig. 5.

After the aging treatment, the aged fibers had not changed their shape. However, according to DSC measurement, the aged fibers have a melting temperature increased by about 7 K in comparison to the non-aged fibers.

Comparative Example 2 was conducted the same way as Example 2. However, only the untreated ribbon-like flat fibers were used, i.e. without the aged fibers. The final network had a thickness of only 250 µm.

A comparison of Example 2 and Comparative Example 2 shows that the use of two kinds of fibers differing in their melting point, results in an improved mechanical stabilization during the sintering process, thereby avoiding a compacting of the metal fibers.

Examples 3 and 4 demonstrate the preparation of a composite network structure in accordance with the present invention.

Example 3: A network of already sintered metal fibers (sintered at 920 °C (200 K/min average heating rate, argon atmosphere, 60 sec hold time, natural cooling, i.e. removing from the furnace and allowing to cool to room temperature by themselves) was placed on a copper foil (99.9+, 10 µm thickness) and sintered together using the same 920 °C temperature program which was used for the initial sintering of the network of metal fibers. A photograph of the resulting composite network structure is shown in Fig. 6.

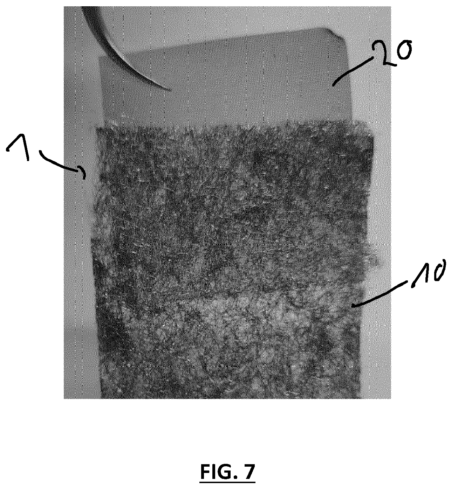

Example 4: Non-sintered fibers were placed in a loose manner on a fine meshed copper mesh and sintered at 920 °C (200 K/min average heating rate, argon atmosphere, 60 sec hold time, natural cooling, i.e. removing from the furnace and allowing to cool to room temperature by themselves). The fibers within themselves and to the copper network are firmly sintered together. A photograph of the resulting composite network structure is shown in Fig. 7.

Thicknesses and width of metal fibers as mentioned herein can be determined either by scanning electron microscopy or by micro CT. Melting points of metal fibers can be determined by DSC.

### Reference signs

- 1: composite network structure
- 10: first layer
- 14: metal fiber
- 20: second layer
- 21: roll
- 22: roll
- 23: roll
- 24: roll
- 30: electrode
- 40: doctor blade
- 42: slurry

## Claims

1. Three-dimensional (3D) network of metal fibers,
comprising a plurality of metal fibers fixed to one another,
wherein said plurality of metal fibers (14) comprises a first kind of metal fibers and a second kind of metal fibers, wherein the first kind and second kind of metal fibers (14) are different from one another, in particular in regard to their mechanical properties.

2. Three-dimensional (3D) network of metal fibers according to claim 1,
wherein the second kind of metal fibers have a thickness of 50 µm or less, more preferably of 30 µm or less, even more preferably of 10 µm or less and most preferably of 5.0 µm or less and/or
wherein the second kind of metal fibers have a width of 80 µm or less, more preferable of 70 µm or less, even more preferable of 40 µm or less and most preferably of 5.0 µm or less and/or
wherein the first kind of metal fibers has a thickness and/or width which is at least times the thickness and/or width of the second kind of metal fibers.

3. Three-dimensional (3D) network of metal fibers according to claim 1 or 2, wherein the first kind of metal fibers differs from the second kind of metal fibers in the cross-sectional form and/or
wherein the first kind of metal fibers differs from the second kind of metal fibers in their melting point before being sintered to one another and/or wherein the first kind of metal fibers differs from the second kind of metal fibers in their longitudinal shape and/or
wherein the first kind of metal fibers differs from the second kind of metal fibers in their width and/or thickness and/or
wherein the first kind of metal fibers differs from the second kind of metal fibers in their metal alloy, in particular in regard to alloying additions to the same base metal.

4. Three-dimensional (3D) network of metal fibers according to any of the preceding claims,
wherein at least the metal fibers of the second kind have a non-round cross-section, in particular a ribbon like shape and/or
wherein the metal fibers of the first kind have a substantially round cross-section.

5. Three-dimensional (3D) network of metal fibers according to any of the preceding claims,
wherein the first and second kind of metal fibers differ in their melting point before being sintered to one another by at least 1 K, as determined by DSC measurement.

6. Three-dimensional (3D) network of metal fibers according to any of the preceding claims,
wherein the metal fibers of the first and second kind are of substantially the same material.

7. Three-dimensional (3D) network of metal fibers according to any of the preceding claims,
wherein the weight ratio of the first kind to the second kind is in the range of 1:99 to 99:1, more preferably in the range of 15:85 to 85:15, even more preferably in the range of 30:70 to 70:30, even further more preferably in the range from 40:60 to 60:40 and/or
wherein the ratio of the first kind of metal fiber to the second kind of metal fiber is set such that the amount of the first kind is above a percolation threshold.

8. Three-dimensional (3D) network of metal fibers according to any of the preceding claims,
wherein the 3D network of metal fibers has a thickness of at least 200 µm, more preferably of at least 500 µm, further more preferably of greater than 550 µm, even more preferably of at least 750 µm, even further more preferably of at least 1.000 µm.

9. Composite structure (1) comprising a three-dimensional (3D) network of metal fibers according to any of the preceding claims,
wherein the 3D network is a first layer (10) and is arranged on a second layer (20), which is distinct from the first layer (10).

10. Composite structure according to claim 9,
wherein the second layer (20) is of at least substantially the same material as the first and/or second kind of metal fibers (14) and/or
wherein the first and second layer are fixed to one another, so that an electrical contact is formed between these layers.

11. Composite structure according to claim 9,
wherein the second layer (20) is made of a different material than the first and second kind of metal fibers, and is in particular made of a polymeric material and/or
wherein the second layer (20) is removable form the 3D network of metal fiber, e.g. by peeling off.

12. Composite structure according to any of claims 9 to 11,
wherein the second layer (20) is a porous layer, in particular a porous metal layer or a porous non-metal layer, and/or
wherein the second layer has a thickness of at least 1 µm, preferably of at least 5 µm, even more preferably of at least 10 µm, even further more preferably of at least 20 µm.

13. Method of producing a three-dimensional (3D) network of metal fibers, comprising the following steps:
Step A: Mixing a first kind of metal fibers (14) and a second kind of metal fibers (14) with one another, thereby providing a mixture of a plurality of metal fibers (14),
Step B: sintering the metal fibers (14) in the mixture obtained in step A to one another to form a network of metal fibers in accordance with any of claims 1 to 9 or a composite structure (1) in accordance with any of claims 10 to 13.

14. Method of producing an electrode, in particular a battery electrode by providing a composite structure (1) according to claim 12 and introducing a slurry of an active electrode material through the porous second layer and/or
introducing a slurry of an active electrode material through pores of the 3D network of metal fibers, wherein the pores of said 3D network of metal fibers are voids between the metal fibers.

15. Battery comprising at least one electrode having a 3D network of metal fibers according to any of claims 1 to 8, wherein the battery is in particular a mono-cell battery or a multi-cell battery.
